# EUROPÄISCHE PATENTSCHRIFT

(11) **EP 3 045 933 B1**
(45) Veröffentlichungstag und Bekanntmachung des Hinweises auf die Patenterteilung: **30.08.2017**
(21) Anmeldenummer: 15003467.6
(22) Anmeldetag: 05.12.2015
(51) Int. Cl.: G01S 7/41, G01S 13/89, G01S 13/93, G01S 13/87

(54) **VERFAHREN ZUM BETRIEB EINES FAHRERASSISTENZSYSTEMS EINES KRAFTFAHRZEUGS UND KRAFTFAHRZEUG**
METHOD FOR OPERATING A DRIVER ASSISTANCE SYSTEM OF A MOTOR VEHICLE AND MOTOR VEHICLE
PROCEDE DESTINE AU FONCTIONNEMENT D'UN SYSTEME D'ASSISTANCE DU CONDUCTEUR D'UN VEHICULE AUTOMOBILE ET VEHICULE AUTOMOBILE

(30) Priorität: 13.01.2015 DE 102015000425
(43) Veröffentlichungstag der Anmeldung: 20.07.2016
(73) Patentinhaber: AUDI AG, 85045 Ingolstadt (DE)
(72) Erfinder: Khlifi, Rachid, DE - 85748 Garching (DE)
(74) Vertreter: Thielmann, Frank

(56) Entgegenhaltungen:
- EP-A1- 0 412 719
- DE-A1- 10 315 965
- DE-A1-102005 039 167
- DE-A1-102009 016 562
- JÜRGEN HASCH ET AL: "Millimeter-Wave Technology for Automotive Radar Sensors in the 77 GHz Frequency Band", IEEE TRANSACTIONS ON MICROWAVE THEORY AND TECHNIQUES, IEEE SERVICE CENTER, PISCATAWAY, NJ, US, Bd. 60, Nr. 3, 1. März 2012 (2012-03-01), Seiten 845-860, XP011428605, ISSN: 0018-9480, DOI: 10.1109/TMTT.2011.2178427

## Beschreibung

Die Erfindung betrifft ein Verfahren zum Betrieb eines Fahrerassistenzsystems eines Kraftfahrzeugs und ein Kraftfahrzeug.

Fahrerassistenzsysteme für Kraftfahrzeuge sind inzwischen bei vielen Modellen gängig. Während ein Teil solcher Fahrerassistenzsysteme auf die Unterstützung des Fahrers beim Fahrbetrieb abzielt, widmen sich einige Fahrerassistenzsysteme gezielt dem Schutz des Kraftfahrzeugs vor Beschädigungen, beispielsweise im Fall von Einparksystemen.

So sind beispielsweise Einparksysteme bekannt, die unter Nutzung von Umgebungssensoren des Kraftfahrzeugs, beispielsweise von Ultraschallsensoren und/oder Kameras, zumindest einen Teil des Umfelds des Kraftfahrzeugs erfassen, die Sensordaten der Umgebungssensoren auswerten und Kollisionsrisiken des Kraftfahrzeugs beim Einparkvorgang beurteilen, beispielsweise hinsichtlich anderer Kraftfahrzeuge und/oder sonstiger Objekte, die sich im Fahrweg des Kraftfahrzeugs beim Einparkvorgang befinden können. Ferner sind Fahrerassistenzsysteme bekannt, die meist auf Sensordaten einer Kamera basieren, welche bei der Spurführung helfen. Durch sie soll der Fahrer auf der aktuellen Fahrspur gehalten werden, sei es durch entsprechende Informationsausgabe, insbesondere die Ausgabe von Warnungen, und/oder durch korrigierende Fahreingriffe. Derartige auf die Querführung bezogene Fahrerassistenzsysteme (Spurhaltesysteme) detektieren die Fahrspurbegrenzungen, insbesondere anhand von auf der Straße aufgebrachten Markierungen, und versuchen beispielsweise, das Kraftfahrzeug in der Mitte der aktuellen Fahrspur zu halten.

Ein Problem hinsichtlich von Beschädigungen des Kraftfahrzeugs sind scharfe Straßenränder. Durch Kanten oder dergleichen an der Straßenbegrenzung können kritische Beschädigungen an den Reifen und/oder Felgen des Kraftfahrzeugs auftreten, welche im Extremfall zu Unfällen führen können. Nur durch visuelle Begutachtung der Reifen/Felgen kann der Fahrer Beschädigungen feststellen und gegebenenfalls einen Wechsel der Reifen veranlassen. Derartige Beschädigungen an scharfen Straßenrändern kommen recht häufig vor, nachdem ein kurzes und schnelles Überqueren der Straßenbegrenzung bereits ausreichend sein kann, um starke Beschädigungen an den Reifen und/oder Felgen zu verursachen.

Durch Einparksysteme, bei denen die Kriterien zur Auslösung von Warnungen bzw. sonstigen Maßnahmen meist auf einem Abstand zu einem detektierten Objekt basieren, ist es nicht möglich, zu berücksichtigen, welche Kritikalität eine detektierte Straßenbegrenzung aufweist. Auch Spurhaltesysteme fokussieren sich lediglich darauf, den Verlauf der aktuellen Fahrspur aus Sensordaten feststellen zu können. Zudem nutzen diese bekannten Fahrerassistenzsysteme Ultraschall oder optische Sensoren, insbesondere Kameras. Der Einsatzbereich von Kameras ist jedoch eingeschränkt, nachdem zum einen dann, wenn die Lichtverhältnisse nicht optimal sind, eine Auswertung ihrer Sensordaten erschwert ist. Ferner sind optische Umgebungssensoren, insbesondere Kameras, durch Verschmutzung recht anfällig. Die Bewertung von Grauwerten der aufgenommenen Bilder ist stark abhängig von der äußeren Helligkeit, so dass die Detektionsqualität stark schwankt. Ferner haben Kamera-Systeme den Nachteil, dass die Auswertung äußerst rechen- und kostenintensiv ist, so dass durch optische Umgebungssensoren, insbesondere Kameras, nicht auf gangbare Weise eine zuverlässige Detektion von Risiken hinsichtlich der Straßenbegrenzungen möglich ist.

DE 103 15 965 A1 betrifft ein Verfahren und eine Vorrichtung zur Umkippvermeidung. Dabei wird mittels einer Videosensorik oder über Radarsensorik erkannt, ob am Straßenrand ein Bordstein oder ein morastiger Untergrund vorliegen. Ist dies der Fall, wird der Straßenrand durch eine Lenkmaßnahme so überfahren, dass die Umkippgefahr nicht erhöht wird.

DE 10 2005 039 167 betrifft ein Fahrerassistenzsystem zur Fahrerwarnung bei einem drohenden Verlassen der Fahrspur. Über eine Videosensorik erfasste Straßenränder und über höhen- und/oder abstandsgebende Sensoren erfasste erhabene Objekte werden dahingehend zusammengeführt, dass überprüft wird, ob die Lage der erhabenen Objekte mit dem Straßenrand zusammenfällt. Abhängig davon wird das Warnverhalten angepasst.

DE 10 2013 018 753 A1 betrifft eine Radarsensoranordnung zur Umgebungsüberwachung für ein Kraftfahrzeug, die Bordsteine detektieren und/oder in CMOS-Technologie gefertigt sein kann.

Der Erfindung liegt daher die Aufgabe zugrunde, ein Fahrerassistenzsystem anzugeben, welches Beschädigungsrisiken durch den Verlauf von Straßenbegrenzungen zuverlässig und insbesondere auch aufwandsarm detektieren kann.

Zur Lösung dieser Aufgabe sind erfindungsgemäß ein Verfahren zum Betrieb eines Fahrerassistenzsystems eines Kraftfahrzeugs mit den Merkmalen des Anspruchs 1 und ein Kraftfahrzeug mit den Merkmalen des Anspruchs 10 vorgesehen.

Erfindungsgemäß wird mithin vorgeschlagen, Straßenbegrenzungen im Umfeld des Kraftfahrzeugs durch wenigstens einen Radarsensor kontinuierlich hinsichtlich von Risiken zu überwachen. Die Reflexionen, die der wenigstens eine Radarsensor von der Straßenbegrenzung empfängt, können ausgewertet werden, um Aussagen über die Beschaffenheit, insbesondere die Qualität, der Straßenbegrenzung bzw. deren Gefährdungspotential für das Kraftfahrzeug zu gewinnen. Dabei nutzt die vorliegende Erfindung aus, dass inzwischen Radarsensoren bekannt worden sind, mit denen eine hervorragende Abstandsauflösung für verschiedene Entfernungsklassen, insbesondere auch dicht am Kraftahrzeug, gegeben ist. Derartige Radarsensoren können insbesondere in Halbleitertechnologie, bevorzugt CMOS-Technologie, realisiert sein, worauf im Folgenden noch näher eingegangen werden wird.

Mit derartigen, modernen Radarsensoren, die eine hohe Abstandsauflösung gewährleisten, können nah beieinanderliegende Reflexionen separiert werden, so dass auch eine gute Abschätzung der kleineren Abstände gewonnen werden kann. Diskontinuitäten im Verlauf der Straßenbegrenzung können mit einem hochauflösenden Radarsensor problemlos vermessen werden. Dabei ergeben sich eine Vielzahl weiterer Vorteile durch den Einsatz von Radarsensoren.

Zum einen sind Radarsensoren unabhängig von den äußeren Lichtverhältnissen, das bedeutet, auch bei Dunkelheit können die notwendigen Sensordaten, um die Straßenbegrenzung beurteilen zu können, gewonnen werden. Die Lichtverhältnisse haben keinerlei Einfluss auf den Auswertungsvorgang. Ein weiterer Vorteil von Radarsensoren ist, dass Verschmutzungen einen äußerst geringen Einfluss auf die Qualität der Sensordaten haben, da Schmutzschichten durch den Radarsensor einfach durchstrahlt werden können. Diese Möglichkeit zur Sensierung durch andere Materiestrukturen hindurch ermöglicht es unter anderem auch vorteilhafterweise, die Radarsensoren im Kraftfahrzeug verdeckt zu verbauen, mithin von außen unsichtbar. Beispielsweise ist es denkbar, Radarsensoren innerhalb der Stoßfänger des Kraftfahrzeugs vorzusehen, wobei jedoch auch ein Einsatz innerhalb der Karosserie möglich ist, beispielsweise, wenn ein Fenster aus einem für Radarstrahlung durchlässigen Material in der Karosserie vorgesehen wird, welches dann mit dem restlichen Karosserieteil gemeinsam lackiert werden kann. So können Radarsensoren beispielsweise in Türen des Kraftfahrzeugs verbaut werden.

Die vorgeschlagene Nutzung moderner Radarsensoren ermöglicht es erstmals, verlässlich eine Fahrerassistenzfunktion zur Verfügung zu stellen, durch die Beschädigungen des Kraftfahrzeugs, insbesondere der Reifen und/oder Felgen, die vom Fahrbahnrand, insbesondere dort vorliegenden scharfen Kanten, herrühren, vermieden werden können, insbesondere, indem der Fahrer auf die Gefahr durch Ausgabe einer Warninformation hingewiesen wird. Selbstverständlich sind auch Ausgestaltungen denkbar, in denen ein Fahreingriff erfolgt, beispielsweise um zu vermeiden, dass das Kraftfahrzeug zu dicht an die Straßenbegrenzung herangelangt, wenn diese als kritisch eingestuft wurde.

Ob tatsächlich eine Maßnahme erfolgen muss, wird im Rahmen der vorliegenden Erfindung durch Maßnahmenkriterien entschieden, wobei zweckmäßigerweise mehrere Maßnahmenkriterien eingesetzt werden können. Es sei an dieser Stelle noch darauf hingewiesen, dass der Straßenrand an sich, an dem also die Straßenbegrenzung vorliegt, aus den Radardaten selbst bereits ermittelt werden kann, wobei mehrere Ansätze existieren, die auch kumulativ eingesetzt werden können. So zeichnet sich der Rand einer Straße häufig durch einen Höhenunterschied aus; zum anderen aber ist häufig auch ein Texturwechsel gegeben, der sich bei hochauflösenden Radarsensoren in den Radardaten durch eine Veränderung der Oberflächenstruktur zeigt. Ferner können Umgebungsbereiche eingeschränkt werden, in denen ein Straßenrand vermutet wird. Konkret kann beispielsweise, nachdem eine Gefährdung meist aus einem gewissen Höhenunterschied herrührt, eine Kante als Straßenrand bestimmt werden, an der ein solcher Höhenunterschied festgestellt werden kann. Ist ein Straßenrand erst bekannt, lässt er sich in den Radardaten (und ggf. weiteren Umgebungsdaten) nachverfolgend beibehalten.

Es ist jedoch selbstverständlich auch denkbar, im Rahmen der vorliegenden Erfindung unterstützend Sensordaten weiterer Umgebungssensoren zu betrachten, beispielsweise von optischen Umgebungssensoren, beispielsweise Kameras, oder auch von Laserscannern und dergleichen. Weiterhin können auch sonstige Informationsquellen über die aktuell befahrene Straße genutzt werden, beispielsweise, falls derartige Informationen im digitalen Kartenmaterial eines Navigationssystems des Kraftfahrzeugs vorliegen. Ist die Lage der Straßenbegrenzung erst bekannt, kann deren Verlauf, insbesondere senkrecht zur Fahrtrichtung oder senkrecht zum Verlauf des Straßenrandes, der eine Trennlinie zwischen Straße und benachbartem Gelände ist, und allgemeine Beschaffenheit auch problemlos ausgewertet werden.

Zur Auswertung des Verlaufs der Straßenbegrenzung als sich um den linienartigen Straßenrand erstreckender Bereich, wie er aus den Sensordaten des wenigstens einen Radarsensors ermittelt wurde, wird im Rahmen der vorliegenden Erfindung wenigstens ein Maßnahmenkriterium eingesetzt. Dabei sieht eine einfache Ausgestaltung eines derartigen Maßnahmenkriteriums vor, dass ein den Höhenunterschied zwischen dem Straßenbelag und dem benachbarten Gelände an der Straßenbegrenzung auswertendes Maßnahmenkriterium verwendet wird, welches insbesondere bei Überschreitung eines Höhenschwellwerts erfüllt ist. Es kann mithin überwacht werden, wie groß der Höhenunterschied zwischen der Straße und dem an sie unmittelbar anschließenden Gelände ist. Zu große Höhenunterschiede können zu Beschädigungen des Kraftfahrzeugs, insbesondere der Reifen und/oder Felgen, führen, so dass es zweckmäßig ist, ein derartiges Maßnahmenkriterium einzusetzen.

Die vorliegende Erfindung sieht jedoch vor, dass ein den Verlauf der Straßenbegrenzung in einer vertikalen Ebene auswertendes Maßnahmenkriterium verwendet wird. Dabei kann die vertikale Ebene insbesondere senkrecht zur Fahrtrichtung auf der Straße liegen oder senkrecht zum Verlauf des Straßenrandes entlang der Straße. Durch Auswertung des Verlaufs der Straßenbegrenzung in einer solchen vertikalen Ebene können besonders gut scharfe Kanten erkannt werden, die ein Gefährdungsrisiko insbesondere für die Reifen darstellen.

Konkret ist vorgesehen, dass ein Kantenschärfewert, der die Schärfe von in dem Verlauf auftretenden Kanten beschreibt, mit einem Schärfeschwellwert verglichen wird. Ein Kantenschärfewert überwacht letztlich das Auftreten von Unstetigkeiten im Verlauf der Straßenbegrenzung, beispielsweise hinsichtlich des Auftretens von spitzwinkligen, scharf lokalisierten Kanten und dergleichen. Dabei ist es auch möglich, jeweils einzelnen, auftretenden Kanten einen Kantenschärfewert zuzuordnen, welche dann jeweils getrennt bewertet werden können. Dabei können selbstverständlich Mindestausdehnungen für zu betrachtende Kanten im Verlauf der Straßenbegrenzung in der vertikalen Ebene vorgesehen werden; der Kantenschärfewert kann sich insbesondere aus der Spitzigkeit von an der Kante auftretenden Winkeln und/oder einem das Hervorstehen der Kante beschreibenden Wert ergeben. Überschreitet wenigstens einer des wenigstens einen Kantenschärfewerts einen Schärfeschwellwert, ist das entsprechende Maßnahmenkriterium erfüllt.

Nicht zwangsläufig muss dabei der Verlauf senkrecht zur Fahrtrichtung betrachtet werden, denn es kann durchaus sinnvoll sein, die Ausrichtung jeweils zu betrachtender vertikaler Ebenen am Verlauf des Straßenrandes entlang der Straße selbst festzumachen, nachdem der Straßenrand beispielsweise Einbuchtungen aufweisen kann, in denen der Verlauf der Straßenbegrenzung gegebenenfalls sogar in Fahrtrichtung zweckmäßig ausgewertet werden sollte, wenn beispielsweise das Kraftfahrzeug droht, mit wenigstens einem Reifen diese Einbuchtung zu überfahren. Mithin ist es zweckmäßig, die Ausrichtung der vertikalen Ebene, in der der Verlauf durch das Maßnahmenkriterium ausgewertet wird, senkrecht zum Straßenrand zu wählen.

Es sei bereits an dieser Stelle angemerkt, dass das erfindungsgemäße Verfahren zweckmäßigerweise vorausschauend durchgeführt wird, das bedeutet, es werden alle erkennbaren Straßenränder/Straßenbegrenzungen im Erfassungsbereich des wenigstens einen Radarsensors betrachtet, so dass beispielsweise vorgesehen sein kann, Verläufe der Straßenbegrenzung in vertikalen Ebenen immer in bestimmten Abständen entlang des Straßenrandes auszuwerten.

Zweckmäßigerweise kann der Schärfeschwellwert abhängig von der aktuellen Geschwindigkeit des Kraftfahrzeugs vorgegeben werden. Dies trägt dem Umstand Rechnung, dass Beschädigungen an manchen scharfen Kanten, die an Straßenbegrenzungen auftreten, nur bei höheren Geschwindigkeiten möglich sind und dergleichen. Auf diese Weise können unnötige Warnungen vermieden werden, wenn durch die niedrige Geschwindigkeit des Kraftfahrzeugs das Risiko für eine Beschädigung äußerst niedrig ist.

Eine besonders bevorzugte Weiterbildung der vorliegenden Erfindung sieht vor, dass eine zukünftige Trajektorie des Kraftfahrzeugs vorausberechnet wird, wobei Maßnahmen nur bei Eintritt eines ein Kreuzen der Straßenbegrenzung oder ein Fahren auf der und/oder in einem vorbestimmten Bereich um die Straßenbegrenzung anzeigenden Relevanzkriteriums für die zukünftige Trajektorie durchgeführt werden und/oder das wenigstens eine Maßnahmenkriterium nur für einen Abschnitt der Straßenbegrenzung ausgewertet wird, für den das Relevanzkriterium erfüllt ist. Das durch die Erfindung beschriebene Fahrerassistenzsystem arbeitet mithin vorausschauend, wobei selbstverständlich scharfe Kanten und extreme Höhenunterschiede in Bereichen, die das Kraftfahrzeug ohnehin nie überfahren wird bzw. kann, nicht relevant sind. Dabei ist es bevorzugt, nachdem das Verfahren dann mit einem geringeren Aufwand durchgeführt werden kann, wenn das Relevanzkriterium bestimmt, welche Anteile bzw. Abschnitte der Straßenbegrenzung überhaupt ausgewertet werden müssen. Dabei ist der Begriff der zukünftigen Trajektorie weit zu verstehen; gegebenenfalls können auch Trajektorienscharen und/oder ein Fahrschlauch betrachtet werden. Es können Algorithmen verwendet werden, die beispielsweise bei Spurhalteassistenzsystemen eingesetzt werden, um zu übermitteln, ob die Fahrspurbegrenzung in absehbarer Zeit überfahren wird oder nicht. Es wird mithin durch das Relevanzkriterium überprüft, ob aufgrund des Verhaltens des Kraftfahrzeugs überhaupt die Gefahr besteht, dass es zu einem Kontakt zwischen dem Kraftfahrzeug und der Straßenbegrenzung kommt.

Einer der Vorteile des erfindungsgemäßen Verfahrens ist, dass vorausschauend gearbeitet wird und durch die Radarsensoren auch ein größerer Anteil, auch was die Entfernung vom Kraftfahrzeug angeht, der Umgebung des Kraftfahrzeugs hinsichtlich der Straßenbegrenzungen ausgewertet werden kann. Dies erlaubt es, das erfindungsgemäße Verfahren nicht nur bei niedrigen Geschwindigkeiten, beispielsweise analog zu Einparksystemen, einzusetzen, sondern auch bei höheren Geschwindigkeiten für eine adäquate Warnung und/oder sonstige adäquate Maßnahmen gesorgt werden kann. Es kann mithin vorgesehen sein, dass die Auswertung der Sensordaten und der Maßnahmenkriterien auch bei Geschwindigkeiten des Kraftfahrzeugs, die größer als 20 km/h, insbesondere größer als 40 km/h, sind, durchgeführt wird.

Bevorzugt ist es ferner, wenn mehrere, in ihren Erfassungsbereichen das komplette Umfeld des Kraftfahrzeugs abdeckende Radarsensoren verwendet werden. Es kann mithin durch die Radarsensoren insbesondere eine 360 °-Umfelderfassung realisiert werden, um kontinuierlich den gesamten Bereich der Straße beurteilen zu können. Beispielsweise können acht Radarsensoren eingesetzt werden, von denen jeweils drei im vorderen bzw. hinteren Stoßfänger verbaut sind, zwei weitere, die den Bereich seitlich neben dem Kraftfahrzeug abdecken sollen, können beispielsweise in den Türen des Kraftfahrzeugs verbaut sein.

Wie bereits erwähnt wurde, werden zweckmäßig Sensordaten aus dem gesamten Erfassungsbereich des wenigstens einen Radärsensors hinsichtlich der Straßenbegrenzung ausgewertet, was die vorausschauende Natur des hier beschriebenen Verfahrens unterstreicht. Mithin kann vorgesehen sein, dass Straßenbegrenzungen bis zu einem Abstand von wenigstens 20 Metern ausgewertet werden, wobei auch größere Reichweiten grundsätzlich denkbar sind und bei höheren Geschwindigkeiten des Kraftfahrzeugs auch zweckmäßig.

Um eine hinreichend große Auflösung des wenigstens einen Radarsensors zu gewährleisten, sieht eine bevorzugte Ausgestaltung der Erfindung vor, dass der wenigstens eine Radarsensor mit einer Bandbreite von wenigstens 1 GHz, bevorzugt wenigstens 3 GHz, und/oder in einem Frequenzbereich von 77 bis 81 GHz betrieben wird. Über derart große Bandbreiten von beispielsweise 4 GHz kann erreicht werden, dass dicht beieinanderliegende Reflexionen separiert werden können, mithin die gewünschte hohe Auflösung entsteht. Beispielsweise kann vorgesehen sein, dass eine Frequenzbandbreite von 4 GHz im Frequenzbereich von 77 bis 81 GHz gewählt wird.

Eine besonders zweckmäßige Ausgestaltung der Erfindung sieht hierbei vor, dass als der wenigstens eine Radarsensor ein Radarsensor mit einem als Halbleiterchip, insbesondere CMOS-Chip, realisierten Radartransceiver verwendet wird. Hierbei kann dadurch eine weitere Verbesserung erreicht werden, dass durch den Halbleiterchip auch eine Steuereinheit des Radarsensors und/oder eine digitale Signalverarbeitungskomponente realisiert sind und/oder der Halbleiterchip gemeinsam mit einer Antennenanordnung des Radarsensors als ein Package realisiert ist. Diese auf Halbleitertechnologie basierenden Radarsensoren sind ein Beispiel für die kürzlich zugänglich gewordenen modernen Radarsensoren, die die Durchführung des erfindungsgemäßen Verfahrens erst sinnvoll ermöglichen.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Es sei an dieser Stelle noch angemerkt, dass insbesondere dann, wenn ohnehin das komplette Umfeld des Kraftfahrzeugs durch Radarsensoren erfasst wird, selbstverständlich durch das hier beschriebene Fahrerassistenzsystem auch ein Fall abgedeckt werden kann, in dem das Kraftfahrzeug zum Teil bereits neben der Straße fährt, beispielsweise mit zwei Rädern, und auf die Straße zurücklenken möchte. Wird durch dieses Zurücklenken eine Gefahr erkannt, kann eine entsprechende Maßnahme, insbesondere die Ausgabe einer Warninformation an einen Fahrer, durchgeführt werden.

Neben dem Verfahren betrifft die Erfindung auch ein Kraftfahrzeug, aufweisend ein Fahrerassistenzsystem mit einem zur Durchführung des erfindungsgemäßen Verfahrens ausgebildeten Steuergerät. Selbstverständlich weist das Kraftfahrzeug auch den wenigstens einen Radarsensor auf. Sämtliche Ausführungen bezüglich des erfindungsgemäßen Verfahrens lassen sich analog auf das erfindungsgemäße Kraftfahrzeug übertragen, so dass auch mit diesem die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs,
- Fig. 2: einen Ablaufplan des erfindungsgemäßen Verfahrens,
- Fig. 3: ein Kraftfahrzeug auf einer Straße in einer ersten Fahrsituation, und
- Fig. 4: ein Kraftfahrzeug auf einer Straße in einer zweiten Fahrsituation.

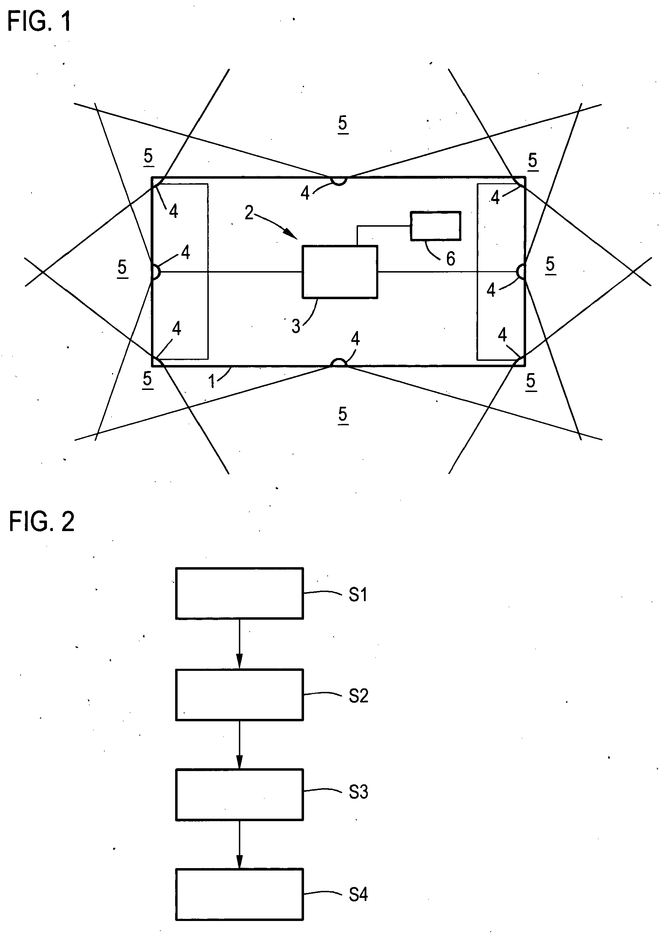

Fig. 1 zeigt eine Prinzipskizze eines erfindungsgemäßen Kraftfahrzeugs 1. Dieses weist ein Fahrerassistenzsystem 2 mit einem Steuergerät 3 auf, das zur Durchführung des erfindungsgemäßen Verfahrens ausgebildet ist, welches im Folgenden noch näher erläutert werden wird. Hierzu wertet das Steuergerät 3 Sensordaten von acht Radarsensoren 4 aus, die das gesamte Umfeld des Kraftfahrzeugs in einem 360 °-Radius erfassen. Die sich teilweise überlappenden Erfassungsbereiche 5 der Radarsensoren 4 sind in Fig. 1 ebenso angedeutet. Es handelt sich um Weitwinkel-Radarsensoren auf Halbleiterbasis, die mithin einen Halbleiterchip aufweisen, durch den vorliegend neben einem Radar-Transceiver auch eine digitale Signalverarbeitungskomponente (DSP) und eine Steuereinheit des Radarsensors realisiert sind. Die Antennenanordnung der Radarsensoren 4 ist gemeinsam mit dem Halbleiterchip als ein Package realisiert. Damit sind äußerst kurze Signalwege gegeben, was das Signal-zu-Rauschverhältnis erhöht und die Ortsauflösung der Radarsensoren 4 weiter verbessert, welche durch den Betrieb in einem Frequenzbereich von 77 bis 81 GHz mit einer Frequenzbandbreite von 4 GHz bereits äußerst hoch ist.

Die Radarsensoren 4 sind verdeckt im Kraftfahrzeug 1 verbaut, wobei sich die jeweils drei vorderen und drei hinteren Radarsensoren 4 innerhalb des Stoßfängers befinden und die beiden seitlichen Radarsensoren 4 innerhalb von Türen des Kraftfahrzeugs verbaut sind.

Die Sensordaten der Radarsensoren 4 werden dem Steuergerät 3 über ein Bussystem des Kraftfahrzeugs 1 zugeführt. Die Radarsensoren 4 haben vorliegend eine Reichweite von 30 Metern, wobei alle Sensordaten bis hin zu der Maximalreichweite im Hinblick auf die Straßenbegrenzung der aktuell vom Kraftfahrzeug befahrenen Straße ausgewertet werden. Dabei soll der Begriff der Straßenbegrenzung vorliegend als der Übergangsbereich vom flachen Straßenbelag zu dem an die Straße anliegenden Gelände verstanden werden, mithin als eine ausgedehnte Zone zu beiden Seiten der Straße.

Will man als eine Linie eine geometrische Grenze der Straße bezeichnen, wird hier der Begriff des Straßenrandes verwendet. Diese Linie beschreibt üblicherweise, wö das Material des Straßenbelags endet. Um die Straßenbegrenzung und den Straßenrand räumlich lokalisieren zu können, ist es denkbar, ebenso nur die Sensordaten der Radarsensoren 4 auszuwerten; es ist jedoch auch möglich, Sensordaten anderer Umgebungssensoren, beispielsweise von Kameras, oder sonstige Informationsquellen, beispielsweise digitales Kartenmaterial eines Navigationssystems des Kraftfahrzeugs 1, mit zu berücksichtigen.

In Fig. 1 ist schließlich noch eine Anzeigeeinrichtung 6 dargestellt, über die Warnungen vor einer Gefährdung des Kraftfahrzeugs durch die Straßenbegrenzung ausgegeben werden können.

Fig. 2 zeigt einen Ablaufplan eines Ausführungsbeispiels des erfindungsgemäßen Verfahrens.

Die Aufnahme von Sensordaten der Radarsensoren 4 ist dabei durch den Schritt S1 dargestellt. Nachdem der Straßenrand und die Straßenbegrenzung aus den Radardaten alleine oder, wie oben beschrieben, bevorzugt unter Berücksichtigung weiterer Informationen, ermittelt wurde, wird in einem Schritt S2 überprüft, ob Abschnitte der Straßenbegrenzung existieren, die für den weiteren Betrieb des Kraftfahrzeugs überhaupt relevant sind. Hierzu wird ein Relevanzkriterium ausgewertet, in dessen Rahmen die zukünftigen Trajektorien des Kraftfahrzeugs 1 betrachtet werden, das bedeutet, es werden Egodaten über das Kraftfahrzeug 1 selbst ausgewertet, um festzustellen, ob sich das Kraftfahrzeug 1 überhaupt kritisch der Straßenbegrenzung nähert oder diese gar überfährt. Hierbei können beispielsweise als Egodaten des Kraftahrzeugs 1 dessen aktuelle Fahrtrichtung, die aktuelle Geschwindigkeit, der aktuelle Lenkwinkel und dergleichen betrachtet werden. Wird das Kraftfahrzeug 1 wenigstens teilweise automatisch gesteuert, können selbstverständlich auch Trajektoriendaten eines entsprechenden Fahrzeugsystems berücksichtigt werden. Relevant ist ein Abschnitt der Fahrbegrenzung dann, wenn das Kraftfahrzeug 1 der Straßenbegrenzung äußerst nahe kommt oder diese gar kreuzt.

Für Abschnitte, die das Relevanzkriterium erfüllen, wird in einem Schritt S3 überprüft, ob wenigstens ein Maßnahmenkriterium erfüllt ist. Dabei werden vorliegend zwei unterschiedliche Maßnahmenkriterien betrachtet. Eines dieser Maßnahmenkriterien betrifft den Höhenunterschied zwischen dem Straßenbelag und dem an die Straße anschließenden Gelände. Überschreitet dieser Höhenunterschied einen Höhenschwellwert, ist ein erstes Maßnahmenkriterium erfüllt. Dieses Maßnahmenkriterium kann selbstverständlich auch verfeinert werden, beispielsweise, indem überprüft wird, auf welcher Strecke sich dieser Höhenunterschied einstellt.

Ein zweites Maßnahmenkriterium betrifft den Verlauf der Straßenbegrenzung in einer vertikalen Ebene senkrecht zum Verlauf des Fahrbahnrandes. Dieser Verlauf in der vertikalen Ebene wird auf Kanten hin ausgewertet, die eine Gefahr für das Kraftfahrzeug, insbesondere die Reifen und/oder die Felgen, darstellen könnten. Die Kritikalität von Kanten dieses Verlaufs wird über einen Kantenschärfewert beschrieben, der umso höher wird, je spitzer die auftretenden Winkel sind und je mehr die Kante hervorsteht. Dabei können Kantenschärfewerte für verschiedene, entlang einer vertikalen Ebene auftretende Kanten betrachtet werden. Überschreitet der Kantenschärfewert einen von der aktuellen Geschwindigkeit des Kraftfahrzeugs abhängigen Schärfeschwellwert, ist das Maßnahmenkriterium erfüllt.

Ist eines der Maßnahmenkriterien erfüllt, wird in einem Schritt S4 eine entsprechende Maßnahme eingeleitet, vorliegend insbesondere die Ausgabe einer Warnung an den Fahrer. Nachdem, wie bereits erwähnt wurde, Straßenbegrenzungen im gesamten Erfassungsbereich der Radarsensoren 4 überwacht werden, ist insbesondere auch eine ortsaufgelöste Warnung denkbar, das bedeutet, dem Fahrer kann angezeigt werden, wo die Gefahr droht und gegebenenfalls auch wann. Eine Variante des Verfahrens sieht vor, als Maßnahme auch Fahreingriffe vorzusehen, die eine Beschädigung, die beispielsweise unmittelbar bevorsteht, vermeiden.

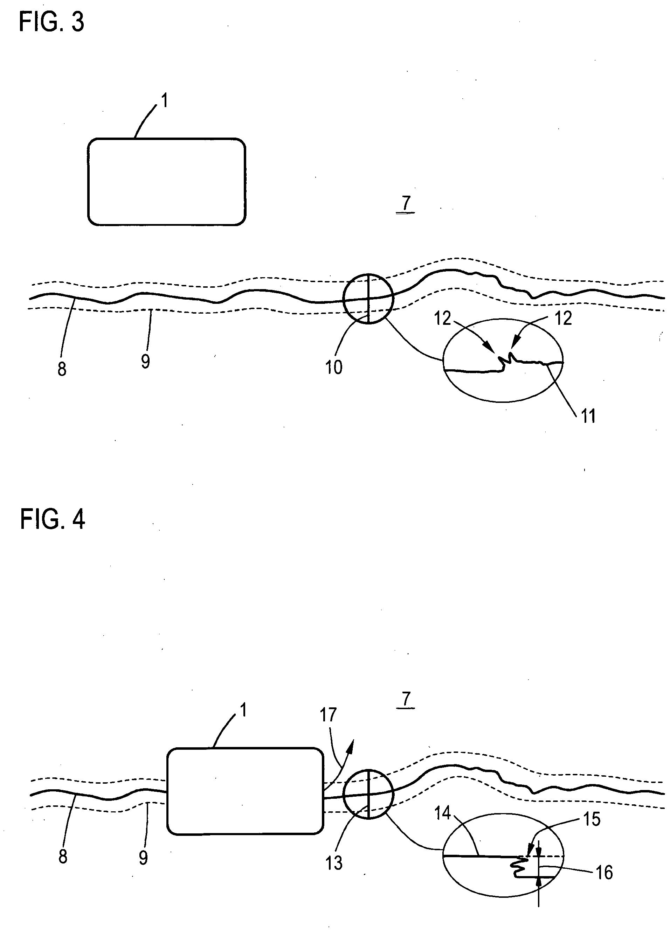

Fig. 3 zeigt das Kraftfahrzeug 1 in einer ersten Fahrsituation auf einer Straße 7, die den Straßenrand 8 mit der Straßenbegrenzung 9 aufweist. Der Verlauf der Straßenbegrenzung 9 in einer vertikalen Ebene, die bei 10 angedeutet ist, wird durch die Kurve 11 beschrieben. Ersichtlich weist der Verlauf zwei scharfe, hervorstehende Kanten 12 auf, die einen hohen Kantenschärfewert zur Folge hätten, nachdem auch eine gewisse Beschädigungsgefahr für die Reifen besteht.

Fig. 4 zeigt das Kraftfahrzeug 1 in einer weiteren Fahrsituation auf der Straße 7, wobei es nun, wie ersichtlich, mit zwei Reifen bereits neben der Straße 7 befindlich ist. Der Fahrer beabsichtigt, vollständig auf die Straße 7 zurückzulenken, wie durch den Pfeil 17 angedeutet wird. Durch die Auswertung der Sensordaten der Radarsensoren 4 kann hier festgestellt werden, ob beim Zurücklenken auf die Straße eine Beschädigungsgefahr für das Kraftfahrzeug 1, insbesondere dessen Reifen und/oder Felgen, besteht. Beispielhaft ist für eine vertikale Ebene 13 auch hier der Verlauf der Straßenbegrenzung 9 in Form der Kurve 14 genauer gezeigt. Relevant für die Sicherheit des Kraftfahrzeugs ist hier nicht nur das Vorliegen von Kanten 15, sondern auch der Höhenunterschied 16 zwischen dem Straßenbelag und dem umliegenden Gelände.

Alle diese Besonderheiten können mit Hilfe der Radarsensoren 4 vermessen und mit Hilfe des Steuergeräts 3 ausgewertet werden, um bei Beschädigungsgefahr entsprechende Warnungen auszugeben und/oder Fahreingriffe vorzunehmen.

## Patentansprüche

1. Verfahren zum Betrieb eines Fahrerassistenzsystems (2) eines Kraftfahrzeugs (1), wobei Sensordaten wenigstens eines auf die Umgebung des Kraftfahrzeugs (1) gerichteten Radarsensors (4) des Kraftfahrzeugs (1) zur Ermittlung eines Verlaufes einer Straßenbegrenzung (9) einer von dem Kraftfahrzeug (1) befahrenen Straße (7) ausgewertet werden, wobei bei Erfüllung wenigstens eines Maßnahmenkriteriums, das eine Gefährdung des Kraftfahrzeugs (1), insbesondere von Reifen und/oder Felgen, durch die Beschaffenheit der Straßenbegrenzung (9) anzeigt, eine Maßnahme zur Warnung des Fahrers und/oder zur Reduzierung der Gefährdung durch einen Fahreingriff eingeleitet wird,
**dadurch gekennzeichnet,**
**dass** ein den Verlauf der Straßenbegrenzung (9) in einer vertikalen Ebene (10, 13) auswertendes Maßnahmenkriterium verwendet wird, wobei ein Kantenschärfewert, der die Schärfe von in dem Verlauf auftretenden Kanten (12, 15) beschreibt, mit einem Schärfeschwellwert verglichen wird.

2. Verfahren nach Anspruch 1,
**dadurch gekennzeichnet,**
**dass** ein den Höhenunterschied (16) zwischen dem Straßenbelag und dem benachbarten Gelände an der Straßenbegrenzung (9) auswertendes Maßnahmenkriterium verwendet wird, welches insbesondere bei Überschreitung eines Höhenschwellwerts erfüllt ist.

3. Verfahren nach Anspruch 1 oder 2,
**dadurch gekennzeichnet,**
**dass** der Schärfeschwellwert abhängig von der aktuellen Geschwindigkeit des Kraftfahrzeugs (1) vorgegeben wird.

4. Verfahren nach einem der vorangehenden Ansprüche,
**dadurch gekennzeichnet,**
**dass** eine zukünftige Trajektorie des Kraftfahrzeugs (1) vorausberechnet wird, wobei Maßnahmen nur bei Eintritt eines ein Kreuzen der Straßenbegrenzung (9) oder ein Fahren auf der und/oder in einem vorbestimmten Bereich um die Straßenbegrenzung (9) anzeigenden Relevanzkriteriums für die zukünftige Trajektorie durchgeführt werden und/oder das wenigstens eine Maßnahmenkriterium nur für einen Abschnitt der Straßenbegrenzung (9) ausgewertet wird, für den das Relevanzkriterium erfüllt ist.

5. Verfahren nach einem der vorangehenden Ansprüche,
**dadurch gekennzeichnet,**
**dass** die Auswertung der Sensordaten und der Maßnahmenkriterien auch bei Geschwindigkeiten des Kraftfahrzeugs (1), die größer als 20 km/h, insbesondere größer als 40 km/h, sind, durchgeführt wird.

6. Verfahren nach einem der vorangehenden Ansprüche,
**dadurch gekennzeichnet,**
**dass** mehrere, in ihren Erfassungsbereichen (5) das komplette Umfeld des Kraftfahrzeugs (1) abdeckende Radarsensoren (4) verwendet werden und/oder Straßenbegrenzungen (9) bis zu einem Abstand von wenigstens 20 Metern ausgewertet werden.

7. Verfahren nach einem der vorangehenden Ansprüche,
**dadurch gekennzeichnet,**
**dass** der wenigstens eine Radarsensor (4) mit einer Frequenzbandbreite von wenigstens 1 GHz, bevorzugt wenigstens 3 GHz, und/oder in einem Frequenzbereich von 77 bis 81 GHz betrieben wird.

8. Verfahren nach einem der vorangehenden Ansprüche,
**dadurch gekennzeichnet,**
**dass** ein Radarsensor (4) mit einem als Halbleiterchip, insbesondere CMOS-Chip, realisierten Radartransceiver verwendet wird.

9. Verfahren nach Anspruch 8,
**dadurch gekennzeichnet,**
**dass** durch den Halbleiterchip auch eine Steuereinheit des Radarsensors (4) und/oder eine digitale Signalverarbeitungskomponente realisiert sind und/oder der Halbleiterchip gemeinsam mit einer Antennenanordnung des Radarsensors (4) als ein Package realisiert ist.

10. Kraftfahrzeug (1), aufweisend ein Fahrerassistenzsystem (2) mit einem zur Durchführung eines Verfahrens nach einem der vorangehenden Ansprüche ausgebildeten Steuergerät (3).

## Claims

1. Method for operating a driver assistance system (2) of a motor vehicle (1), wherein sensor data of at least one radar sensor (4) of the motor vehicle (1) directed towards the surroundings of the motor vehicle (1) are evaluated in order to determine a configuration of a road edge (9) of a road (7) on which the motor vehicle (1) is travelling, wherein when at least one action criterion indicating danger to the motor vehicle (1), in particular to tyres and/or wheel rims, due to the condition of the road edge (9) is met, an action to warn the driver and/or to reduce the danger by driving intervention is initiated, **characterised in that** an action criterion is used which evaluates the configuration of the road edge (9) in a vertical plane (10, 13), wherein an edge sharpness value which describes the sharpness of edges (12, 15) occurring in the configuration is compared with a sharpness threshold value.

2. Method according to claim 1, **characterised in that** an action criterion is used which evaluates a height difference (16) between the road covering and the land adjacent to the road edge (9), this criterion being met in particular when a height threshold value is exceeded.

3. Method according to claim 1 or 2, **characterised in that** the sharpness threshold value is predetermined as a function of the current speed of the motor vehicle (1).

4. Method according to one of the preceding claims, **characterised in that** a future course of the motor vehicle (1) is calculated in advance, wherein actions are only performed upon entry of a relevance criterion for the future course indicating crossing of the road edge (9) or driving on and/or in a predetermined area around the road edge (9), and/or the at least one action criterion is evaluated only for a portion of the road edge (9) for which the relevance criterion is met.

5. Method according to one of the preceding claims, **characterised in that** the evaluation of the sensor data and the action criteria is also performed at speeds of the motor vehicle (1) which are higher than 20 km/h, in particular higher than 40 km/h.

6. Method according to one of the preceding claims, **characterised in that** a plurality of radar sensors (4) are used which in their detection ranges (5) cover the complete surroundings of the motor vehicle (1) and/or road edges (9) up to a distance of at least 20 metres are evaluated.

7. Method according to one of the preceding claims, **characterised in that** the at least one radar sensor (4) is operated with a frequency bandwidth of at least 1 GHz, preferably 3 GHz, and/or in a frequency range of 77 to 81 GHz.

8. Method according to one of the preceding claims, **characterised in that** a radar sensor (4) is used with a radar transceiver provided as a semiconductor chip, in particular a CMOS chip.

9. Method according to claim 8, **characterised in that** a control unit of the radar sensor (4) and/or a digital signal processing component are also implemented by the semiconductor chip and/or the semiconductor chip is implemented together with an antenna arrangement of the radar transceiver (4) as a package.

10. Motor vehicle (1), comprising a driver assistance system (2) with a control device (3) designed for carrying out a method according to one of the preceding claims.

## Revendications

1. Procédé de fonctionnement d'un système d'assistance au conducteur (2) d'un véhicule automobile (1), dans lequel des données de capteur au moins d'un capteur radar (4) du véhicule automobile (1) dirigé sur l'environnement du véhicule automobile (1) sont évaluées pour détecter un parcours d'un terre-plein (9) d'une rue (7) parcourue par le véhicule automobile (1), dans lequel, lorsqu'est satisfait au moins un critère de mesure qui indique une mise en danger du véhicule automobile (1), en particulier des pneus et/ou des jantes par la nature du terre-plein (9), une mesure est enclenchée pour avertir le conducteur et/ou réduire la mise en danger par une intervention de conduite,
**caractérisé en ce que** :
l'on utilise un critère de mesure évaluant le parcours du terre-plein (9) dans un plan vertical (10, 13), dans lequel une valeur de netteté des bords qui décrit la netteté de bords (12, 15) intervenant dans le parcours est comparée à une valeur de seuil de netteté.

2. Procédé selon la revendication 1,
**caractérisé en ce que** :
on utilise un critère de mesure évaluant une différence de hauteur (16) entre le revêtement routier et les terrains voisins sur le terre-plein (9), lequel critère est satisfait lors du dépassement d'une valeur de seuil de hauteur.

3. Procédé selon la revendication 1 ou la revendication 2,
**caractérisé en ce que** :
la valeur de seuil de netteté est prédéfini en fonction de la vitesse courante du véhicule automobile (1).

4. Procédé selon l'une quelconque des revendications précédentes,
**caractérisé en ce que** :
l'on calcule à l'avance une trajectoire future du véhicule automobile (1), dans lequel on effectue des mesures uniquement à l'entrée d'un critère de pertinence indiquant un passage par le terre-plein (9) ou une conduite sur et/ou dans une zone prédéterminée autour du terre-plein (9) pour la trajectoire future et/ou le au moins un critère de mesure n'est évalué que pour une section du terre-plein (9) pour lequel le critère de pertinence est satisfait.

5. Procédé selon l'une quelconque des revendications précédentes,
**caractérisé en ce que** :
l'évaluation des données de capteur et des critères de mesure est réalisée également à des vitesses du véhicule automobile (1) qui sont supérieures à 20 km/h, en particulier supérieures à 40 km/h.

6. Procédé selon l'une quelconque des revendications précédentes,
**caractérisé en ce que** :
plusieurs capteurs radar (4) couvrant dans leurs zones de détection (5) l'environnement complet du véhicule automobile (1) sont utilisés et/ou des terre-pleins (9) sont évalués jusqu'à une distance d'au moins 20 mètres.

7. Procédé selon l'une quelconque des revendications précédentes,
**caractérisé en ce que** :
le au moins un capteur radar (4) opère avec une largeur de bande de fréquence d'au moins 1 GHz, de préférence d'au moins 3 GHz et/ou dans une plage de fréquences de 77 à 81 GHz.

8. Procédé selon l'une quelconque des revendications précédentes,
**caractérisé en ce que** :
un capteur radar (4) est utilisé avec un émetteur-récepteur radar réalisé sous la forme d'une puce de semi-conducteur, en particulier une puce CMOS.

9. Procédé selon la revendication 8,
**caractérisé en ce que** :
on réalise par la puce à semi-conducteur également une unité de commande du capteur radar (4) et/ou un composant de traitement de signal numérique et/ou la puce à semi-conducteur est réalisée conjointement avec un agencement d'antenne du capteur radar (4) sous la forme d'un package.

10. Véhicule automobile (1) présentant un système d'assistance au conducteur (2) avec un appareil de commande (3) conçu pour réaliser un procédé selon l'une quelconque des revendications précédentes.
